Europäisches Patentamt

European Patent Office

Office européen des brevets

(19)

(11) Publication number : **0 676 481 A2**

(12) **EUROPEAN PATENT APPLICATION**

(21) Application number : **95301788.6**

(22) Date of filing : **17.03.95**

(51) Int. Cl.$^6$ : **C22C 27/06,** C22C 38/18,
B22F 3/00, B01J 35/04

(30) Priority : **25.03.94 JP 56060/94**
**25.11.94 JP 291737/94**

(43) Date of publication of application :
**11.10.95 Bulletin 95/41**

(84) Designated Contracting States :
**DE FR GB IT**

(71) Applicant : **NGK INSULATORS, LTD.**
**2-56 Suda-cho,**
**Mizuho-ku**
**Nagoya-City, Aichi Prefecture 467 (JP)**

(72) Inventor : **Ohashi, Tsuneaki**
**1079-1, Michiduka-cho**
**Ogaki-city, Gifu-pref. 503 (JP)**
Inventor : **Yoshida, Hitoshi**
**16-4, Shimizuda,**
**Make-machi**
**Okazaki-city, Aichi-pref. 444 (JP)**

(74) Representative : **Paget, Hugh Charles Edward**
**et al**
**MEWBURN ELLIS**
**York House**
**23 Kingsway**
**London WC2B 6HP (GB)**

(54) **Alloy for high resistivity heater.**

(57)    The alloy contains 41 - 70 wt% of Cr, 8 - 20 wt% of Al, and Fe and inevitable impurities as a remainder. Since this alloy has the higher specific resistance than a Fe-Cr-Al type of alloy conventionally used as a material for a heater, the heater using the alloy has wide variety of configuration. The alloy is excellent in corrosion resistance since the alloy contains the larger amount of Cr than a conventional Fe-Cr-Al type of alloy. When the alloy is produced by a sintering method using a metallic powder or the like as a starting material, electric resistance is further enhanced by suitably controlling a firing period or a firing temperature, etc., to disperse pores.

EP 0 676 481 A2

## BACKGROUND OF THE INVENTION AND RELATED ART STATEMENT

The present invention relates to an alloy having a high specific resistance capable of suitably using as a material for composing a honeycomb heater and to a honeycomb heater produced with the alloy.

A material to be used for a heater is desired to have high resistance to corrosion, impact, etc., under an atmosphere to be used besides a high electric resistance. Conventionally, Fe-Cr-Al alloy has widely been used as a material for a heater. For example, Japanese Patent Laid-Open 5-98401 discloses a Fe-Cr-Al powder alloy containing 20 - 35 wt% of Cr, 4 - 12 wt% of Al, 0.10 wt% or less of oxygen, 0.05 - 0.20 wt% of nitrogen and a balance of Fe as a Fe-Cr-Al powder alloy suitable for a heater, a member used at a high temperature.

Japanese Patent Laid-Open 4-215853 discloses a heat-resistant metallic monolith suitably applicable to a catalyst carrier, a heater, a catalyst converter, or the like, the monolith containing 2.5 - 30 wt% of Al, 0 - 40 wt% of Cr, and the remainder of Fe and inevitable impurities.

Such Fe-Cr-Al alloys conventionally used as a material of heater as mentioned above have had a problem that specific resistance is so low as about 150 $\mu\Omega$cm and a configuration of a heater is restricted.

For example, it has been known that slits are provided to a honeycomb structure of a honeycomb heater to be used for the purpose of light-off of a catalyst in an early stage in a catalyst system for an automobile exhaust gas purification so as to obtain a desired electric resistance. When the cell structure and the configuration are the same, the honeycomb structure requiring the higher electric resistance needs the larger number of slits. The honeycomb structure which material has the lower specific resistance needs the larger number of slits so as to obtain a predetermined electric resistance. However, as the number of slits increases, the strength of the honeycomb structure deteriorates. A honeycomb heater to be mounted on an automobile needs to be designed in consideration of fatigue and deterioration by vibrations and/or heat cycles.

## SUMMARY OF THE INVENTION

The object of the present invention is to provide an alloy having not only the higher specific resistance but also excellent resistance to heat, corrosion, or the like, and to provide a honeycomb heater using such an alloy as a composing material.

According to the present invention, there is provided an alloy containing 41 - 70 wt% of Cr, 8-20 wt% of Al, and a balance of Fe and inevitable impurities for a heater having high specific resistance.

According to the present invention, there is also provided an alloy containing, besides the aforementioned components, 5 wt% or less of one or two components selected from elements in 2A group of the periodic table, 3A group of the periodic table, 4A group of the periodic table, B, C, and oxides thereof.

According to the present invention, there is further provided a honeycomb heater using a sintered alloy having a composition selected from the aforementioned compositions.

## BRIEF DESCRIPTION OF THE DRAWINGS

Fig. 1 is a perspective view of a honeycomb heater.
Fig. 2 is an explanatory view showing an apparatus for measuring exhaust gas purification rate of a honeycomb heater carrying a catalyst.

## DETAILED DESCRIPTION OF THE INVENTION

Among the compositions of alloys of the present invention each having an aforementioned composition, Cr improves corrosion resistance of alloys. In the present invention, the larger amount of Cr is contained in comparison with conventional Fe-Cr-Al alloys. However, an alloy containing more than 70 wt% of Cr is brittle and liable to break. An alloy containing less than 41 wt% of Cr has a problem of thermal resistance, and high resistibility and thermal resistance (high melting point, low thermal expansion) are incompatible. For the aforementioned reasons, the Cr content was specified to 41 - 70 wt%. However, if high resistibility, thermal resistance, corrosion resistance, etc., are taken into consideration, the Cr content is preferably 45 - 65 wt%, and more preferably 45 - 55 wt%.

Al works as a source of an alumina protective film and is effective in improving oxidation resistance. However, an alloy containing less than 8 wt% of Al is liable to precipitate $\sigma$ phase (Fe50Cr) which makes the alloy brittle. An alloy containing more than 16 wt% of Al is liable to precipitate $\rho$ phase (Cr20Al) or $\gamma$ phase (Cr50Al) which makes the alloy brittle. An alloy containing more than 20 wt% of Al is brittle even if these intermetallic compounds are not precipitated. For the aforementioned reasons, the Al content was specified to 8 - 20 wt%. However, the Al content ranges preferably from 12 to 16 wt% so as not to have precipitation of such intermetallic compounds as mentioned above, which cause brittleness.

Further, an alloy of the present invention desirably has a composition containing 45 - 65 wt% of Cr and 12 - 16 wt% of Al. A composition in this range gives a specific resistance of at least 250 $\mu\Omega$cm. The composition is in the range of a single phase surrounded by a range where $\sigma$ phase is precipitated and a range where $\rho$ phase or $\sigma$ phase is precipitated. The crystal lattice seems to be distorted. High resistibility can not be achieved by simply increasing the amounts of Cr and Al, and there is the best composition as described above for achieving high resistibility. This fact was not known until the present inventor found the fact by their research.

Basically, the remainder of an alloy of the present invention is Fe. However, the remainder may contain, besides inevitable impurities, totally 5 wt% or less, preferably 2.5 wt% or less of one or two components selected from elements belonging to 2A group, 3A group, 4A group, B, C and oxides containing such an element. Elements belonging to 2A group (Mg, Ca, etc.), 3A group (Y, lanthanoid, etc.) and 4A group (Ti, Zr, etc.) are effective in enhancing adhesivity of oxidized protective film. B and C are effective in enhancing sinterability of an alloy when an alloy of the present invention is produced by a sintering method.

It is calculated from the range of the aforementioned composition of Cr and Al that Fe as a remainder in an alloy is present in the range of 10 - 51 wt %. An alloy containing more than 51 wt% of Fe has large thermal expansion rate, thereby being liable to generate thermal stress. An alloy containing less than 10 wt% of Fe may be brittle

Since an alloy of the present invention possesses the higher hardness than. an Fe-Cr-Al type of alloy which has conventionally been used as a material for a heater, plastic processing appears to be difficult. Therefore, an alloy of the present invention is preferably produced by a sintering method in which a metallic powder or the like is used as a starting material. This method enables the material to have the higher electric resistance by dispersing pores by suitably controlling firing temperatures, firing periods, or the like. It is also possible to improve brittleness by making the grains fine besides the dispersion of the pores.

Incidentally, an alloy to be used as a material for honeycomb heater having slits for controlling resistance has a specific resistance of preferably 200 $\mu\Omega$cm or more, more preferably 250 $\mu\Omega$cm, because the number of slits can be decreased. Preferably, the alloy has a melting point of 1500°C or more in view of thermal resistance.

Next, a honeycomb heater of the present invention is described.

Here, "honeycomb heater" means a honeycomb structure having at least a pair of electrodes. The honeycomb heater can heat a fluid passing through a throughhole of the honeycomb structure by applying electricity.

A honeycomb heater of the present invention is made of a sintered alloy having an aforementioned composition. That is, the material has a high specific resistance, and electric resistance of the material can be further improved by dispersing pores because the material is a sintered alloy. Therefore, when a honeycomb heater of the present invention is provided with slits to obtain a desired electric resistance, the heater needs the smaller number of slits than a heater made by a conventional Fe-Cr-Al type of alloy, and thereby the strength is enhanced. Additionally, a heater of the present invention has the wider selection of configuration.

In a honeycomb heater of the present invention, the surfaces of cell walls and pores of the honeycomb structure are preferably coated with a metallic oxide having thermal resistance such as $Al_2O_3$, $Cr_2O_3$, or the like so as to improve thermal resistance, oxidation resistance, and corrosion resistance.

An example of producing methods of a honeycomb heater of the present invention is described hereinbelow. First, a metallic powder material is prepared from, for example, Fe powder, Al powder, and Cr powder, or an alloy powder of these metals, or the like. Then, the metallic powder material, an organic binder such as polyvinyl alcohol, and water were mixed. The mixture is subjected to extrusion molding so as to have a desirable honeycomb shape.

Note that it is preferable to mix an antioxidant such as oleic acid with metallic powder before adding water or to use a metallic powder treated in advance so as not to be oxidized.

Then, the honeycomb compact formed by extrusion molding is fired at 1000 - 1450°C under non-oxidizing atmosphere. The firing atmosphere preferably contains hydrogen so that an organic binder is decomposed by Fe, or the like, working as a catalyst and an excellent sintered body can be obtained.

The firing temperature lower than 1000°C or higher than 1450°C is not preferable because the compact does not sinter or because the sintered body is deformed, respectively.

Preferably, the surfaces of the cell walls or the surfaces of the pores are coated with a thermal resistant metallic oxide.

The honeycomb structure obtained as described above is provided with electrodes usually on the circumferential cell walls or inside of the structure by means of brazing, welding, etc., so as to produce a honeycomb heater of the present invention.

The honeycomb heater of the present invention can be suitably used for purifying automobile emissions as a catalyst-loaded honeycomb heater by further loading a catalyst on the surface of the honeycomb structure.

In this case, as a catalyst loaded on the surface. of the honeycomb structure, a honeycomb structure in which a substance having catalytic activity is preferably loaded on a carrier having a large surface area. A typical carrier having a large surface area is, for example, $\gamma$-$Al_2O_3$ type, $TiO_2$ type, $SiO_2$-$Al_2O_3$ type, or perovskite type. A substance having catalytic activity is, for example, a noble metal such as Pt, Pd, or Rh, or a base metal such as Cu, Ni, Cr, or Co. Among them, a preferable catalyst is 10 - 100 g/ft$^3$ of Pt or Pd loaded on a $\gamma$-$Al_2O_3$ type of carrier.

In the present invention, a configuration of a honeycomb structure is not particularly restricted. However, to be specific, the honeycomb structure preferably has a cell density of, for example, 6 - 1500 cpi$^2$(cell/square inch) (0.9 - 233 cell/cm$^2$). The thickness of the cell walls (thickness of ribs) ranges preferably from 50 to 2000 $\mu$m.

Incidentally, "honeycomb structure" means a unitary structure having numerous throughholes by being partitioned by cell walls. A cross section of the throughhole (configuration of a cell) may have any configuration such as a circle, a polygon, or a corrugation.

The present invention is hereinbelow described in more detail with reference to examples. However, the present invention is by no means restricted to these examples.

Note that in the undermentioned examples, the measurement or each test item was conducted by the following method:

**[ Specific Resistance ] :**

A sample of a stick type was used, and the specific resistance was obtained from the following equation by D.C. four probe method.

specific resistance $\rho$ = (voltage E / amperage I)·(distance between terminals L / cross section of sample S)

**[ Melting Point ] :**

Samples were heated under Ar atmosphere, and the temperature at which each sample started melting was defined as the melting point.

**[ Shock Resistance ] :**

Samples were evaluated for shock resistance by three grades of 「◎: excellent」, 「○: good」, and 「×: bad」 on the basis of the cutting-off processability by GC grinding stone (98.3 - 99.7% of SiC, 0.1 - 0.3% of free carbon, 2700 - 2800 Knoop hardness).

**[ Observation of Structure ] :**

The cross section having mirror-finished surface of each sample was subjected to etching, and then the structure was observed. From this observation, the particle diameter and the number of crystalline phases were judged.

**[Increase in Quantity by Oxidation ] :**

Only representative samples were tested. Each of the samples was put in a covered alumina pot and maintained at 1150°C under ambient atmosphere for 100 hours. The weight change $\Delta$ of the pot was measured and divided by the surface area S of the sample to obtain increase in quantity by oxidation (ref. the following equation).

Increase in Quantity by oxidation (mg/cm$^2$) = weight increase $\Delta$w / surface area S of sample

**[Thermal Expansion Coefficient ] :**

Only representative samples were tested. Each of the samples having a stick shape was heated from 40°C to 1000°C under Ar atmosphere and measured for thermal expansion coefficient.

**[ Vickers hardness ] :**

This test followed JIS Z 2244. Upon the measurement, the presence of cracks around the depression made by measuring the samples for Vickers hardness was checked.

**[ Adherence ] :**

The scale exfoliated from the sample and left in each pot in the aforementioned "Increase in Quantity by Oxidation" test was independently collected. The amount of oxidized film exfoliated from the surface of each sample per unit area was calculated. Adherence was determined by the following equation.

$$\text{Adherence(\%)} = 100 \{1 - (\text{amount of exfoliation of oxidized film, mg/cm}^2) / (\text{total amount of oxidized film, mg/cm}^2) \quad (1)$$

When the increase in quantity by oxidation equals to the weight of oxygen contained in the oxidized film and the oxidized film comprises $Al_2O_3$, the total amount of oxidized film is as follows:

$$\text{Total amount of oxidized film} = (\text{amount of oxidized film}) \times \{\text{molecular weight of } Al_2O_3 / (3 \times \text{atomic weight of oxygen})\}$$

$$= (\text{increase in quantity by oxidation}) \times (26.98 \times 2 + 16 \times 3)/(3 \times 16)$$

$$= (\text{increase in quantity by oxidation}) \times 2.1241 \quad (2)$$

$$\therefore \text{Adherence (\%)} = 100 - 100 (\text{amount of exfoliation per unit area}) / \{(\text{increase in quantity by oxidation}) \times 2.1241\}$$

$$= 100 - 47.1 (\text{amount of exfoliation per unit area, mg/cm}^2) /(\text{increase in quantity by oxidation, mg/cm}^2)$$

**[ Porosity ] :**

Samples were measured for porosity by Archimedes method.

**Examples No. 1-13:**

Electrolytic iron (purity of 99.94%), electrolytic chromium (purity of 99.77%), Aluminum (purity of 99.99%) were used as starting materials and subjected to induction melting under Ar atmosphere. Further, it was maintained at 1150°C under Ar atmosphere for 50 hours, followed by gradual cooling down so as to obtain alloy sticks having various compositions as shown in Table 1. Various samples were cut off from the alloy sticks and tested. The results are shown in Table 1.

TABLE 1

| Example No. | 1 | 2 | 3 | 4* | 5* | 6 | 7* | 8* | 9 | 10* | 11* | 12 | 13 |
|---|---|---|---|---|---|---|---|---|---|---|---|---|---|
| Composition (wt%) Cr | 71.8 | 71.8 | 71.8 | 64.8 | 64.8 | 51.9 | 54.9 | 54.8 | 54.9 | 47.9 | 45.9 | 34.9 | 20.0 |
| Al | 10.0 | 15.0 | 19.6 | 10.0 | 15.0 | 6.0 | 10.0 | 15.8 | 20.2 | 15.0 | 12.2 | 19.0 | 5.0 |
| Fe | 18.0 | 13.0 | 8.4 | 25.0 | 20.0 | 42.0 | 35.0 | 29.3 | 24.8 | 37.0 | 41.8 | 46.0 | 74.9 |
| Total | 99.8 | 99.8 | 99.8 | 99.8 | 99.8 | 99.9 | 99.9 | 99.9 | 99.9 | 99.9 | 99.9 | 99.9 | 99.9 |
| Specific resistance ($\mu\Omega$cm) | 241 | 223 | 126 | 223 | 280 | 114 | 208 | 290 | 211 | 340 | 300 | 230 | 150 |
| Melting point (°C) | 1610 | 1600 | 1550 | 1590 | 1580 | 1580 | 1570 | 1570 | 1540 | 1520 | 1550 | 1450 | 1480 |
| Shock resistance | × | × | × | ○ | ○ | × | ◎ | ◎ | × | ◎ | ◎ | ○ | ◎ |
| Number of crystalline phases | 1 | 1 | 2 | 1 | 1 | 2 | 1 | 1 | 2 | 1 | 1 | 1 | 1 |
| Diameter of crystals ($\mu$m) | 300 | 500 | 500 | 500 | 300 | 400 | 500 | 500 | 150 | 300 | 300 | 600 | 300 |
| Increase in Quantity by oxidation (mg/cm²) | — | — | — | — | — | — | — | 1.6 | — | 1.6 | 1.7 | 1.6 | 1.5 |
| Thermal expansion coefficient (1/°C) | — | — | — | — | — | — | — | $22 \times 10^{-6}$ | — | $24 \times 10^{-6}$ | — | $26 \times 10^{-6}$ | 15.8 |

* Present invention

As the results shown in Table 1, each of the samples in Examples 4, 5, 7, 8, 10, and 11, which are the present invention, had high specific resistance of 200 $\mu\Omega$cm or higher and excellent properties such as melting point, shock resistance, etc. Particularly, the samples in Examples 5, 8, 10, and 11, which contains 45 - 65 wt % of Cr and 12 - 16 wt % of Al had very high specific resistance of 250 $\mu\Omega$cm or higher.

Contrarily, the samples in Examples 1 - 3 having Cr excessively and the samples in Example 6 being short of Al, and the samples in Example 9 having Al excessively were bad in shock resistant. Among these, each of the samples in No. 3, 6, 9 has two phases. The composition appears to be out of the scope of single phase which is suitable for obtaining a high resistance. The sample in Example 12, which is in short of Cr, has a low melting point and the thermal expansion coefficient is a little high. Further, the sample in Example 13, which is in short of Cr and Al and has Fe relatively excessively, did not have high specific resistance. Furthermore, the melting point was low, and the thermal expansion coefficient was very high.

## Examples 14 - 21:

Besides the starting materials used in Example No. 1 - 13, there were used Ca (first grade of reagent), Ce (99.9% of purification), Hf (95% or higher of purification), Nd (Fe-86.7Nd alloy), Ti (99.5% of purification), Y (99.9% of purification), Zr (99.6% of purification). Alloy sticks having various kinds of compositions shown in Table 2 were obtained in the same manner as in Examples 1 - 13. Various kinds of samples were cut out from the alloy sticks to be tested. The results are shown in Table 2.

7

Table 2

| Example No. | 14* | 15* | 16* | 17* | 18* | 19* | 20* | 21* |
|---|---|---|---|---|---|---|---|---|
| Composition (wt%) | | | | | | | | |
| Cr | 44.8 | 44.4 | 44.3 | 44.4 | 44.6 | 44.7 | 44.8 | 44.8 |
| Al | 14.9 | 14.8 | 14.7 | 14.9 | 15.0 | 14.8 | 14.7 | 14.7 |
| Fe | 39.7 | 39.1 | 38.8 | 39.0 | 39.8 | 39.3 | 39.4 | 40.4 |
| Others | Ca: 0.5 | Ce: 1.6 | Hf: 2.0 | Nd: 1.6 | Ti: 0.5 | Y: 1.0 | Zr: 1.0 | |
| Total | 99.9 | 99.9 | 99.8 | 99.9 | 99.9 | 99.8 | 99.9 | 99.9 |
| Vickers hardness | 370 | 370 | 370 | 370 | 310 | 370 | 370 | 360 |
| Crack | Present | Present | Present | Present | Present | Present | Present | Present |
| Increase in Quantity by oxidation (mg/cm²) | 1.0 | 6.0 | 3.5 | 1.6 | 1.6 | 0.9 | 2.8 | 2.0 |
| Adherence (%) | 75 | 90 | 100 | 69 | 58 | 40 | 90 | 20 |

* Present invention

As shown in Table 2, the samples in Examples 14 - 20, which contain Ca (2A group), Ce (3A group), Hf (4A group), Nd (3A group), Ti (4A group), Y (3A group) or Zr(4A group), has the higher adherence of the oxidized

protective film in comparison with Example 21.

**Examples 22 - 24:**

Pure Cr powder, Cr-Al alloy powder (Al: 30 wt %), Fe-Al powder (Al: 50 wt%), Fe powder, $Y_2O_3$ powder, Fe-B (B: 20 wt%) were mixed so as to have the compositions shown in Table 3. To the mixture were added water and an organic binder (methyl cellulose) to prepare a body, followed by forming into a bulk. The body was dried, and then fired at 1350 - 1450°C under hydrogen atmosphere for two hours to obtain a sintered body having a shape of bulk. Various kinds of samples are cut off and subjected to various kinds of tests. The results are shown in Table 3.

Table 3

| Example No. | 22* | 23* | 24* |
|---|---|---|---|
| Composition (wt%) | | | |
| Cr | 54.45 | 47.45 | 63.45 |
| Al | 15 | 12 | 16 |
| Fe | 30 | 40 | 20 |
| B | 0.05 | 0.05 | 0.05 |
| $Y_2O_3$ | 0.5 | 0.5 | 0.5 |
| Specific resistance ($\mu \Omega$ cm) | 320 | 340 | 310 |
| Shock resistance | ◎ | ◎ | ◎ |
| Vickers hardness | 370 | 330 | 370 |
| Crack | None | None | None |
| Particle diameter of crystal ($\mu$ m) | 50 | 50 | 50 |

* Present invention

As the results shown in Table 3, the sintered materials in Examples 22 - 24 do not have any cracks around the depression upon measurement of Vickers hardness (ref. Table 2), while the cast material in Examples 14 - 21 had cracks around the depression. Therefore, brittleness of alloys were improved in the sintered materials. It is thought that this improvement in brittleness depends on the remaining pores and the structure of fine particles.

### Examples 25 - 28:

The same metallic powder materials as in Examples 22 - 24 were mixed so as to have compositions shown in Table 4. To the mixture were added water and organic binder (methylcellulose) to prepare a body. The body was subjected to extrusion molding to obtain a honeycomb comprising hexagonal cells with a rib thickness of 4 mil and a cell density of 480 cpi$^2$. The body was dried and then fired at 1350 - 1450°C under hydrogen atmosphere for two hours to obtain a honeycomb structure having a diameter of 90 mm and a thickness of 8 mm.

Then, $\gamma$-$Al_2O_3$ powder and $CeO_2$ powder were mixed together so as to have a weight percentage of 70:30. To the mixture were added water and a very small amount of nitric acid. The mixture was subjected to grinding by a wet method to prepare slurry for wash-coat . Using this slurry, wash-coat layer was formed on the honeycomb structure having slits by a dip method. After the wash-coat layer was dried, the layer was fired at 500°C so as to coat $\gamma$-$Al_2O_3$ and $CeO_2$ on the honeycomb structure. Then, in order to load 30 g/ft$^3$ on the honeycomb structure, the honeycomb structure was immersed in a mixed aqueous solution of chloroplatinic acid and rhodium nitrate for about 20 minutes and then fired at 600°C so as to load a catalyst.

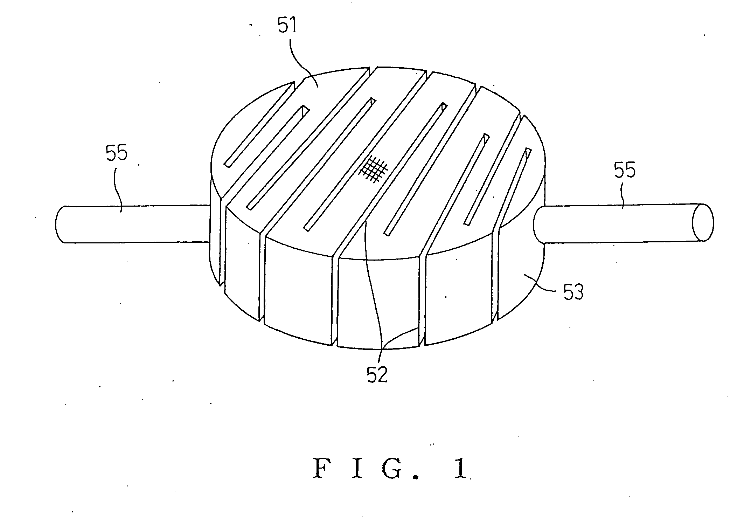

Then, two electric terminals 55 were welded on a circumference 53 of a honeycomb structure 51 as shown in Fig. 1. Ceramic rings (not shown) were provided around the electric terminals 55. Then, slits 52 were arranged by diamond saw so that the heater has a total resistance of 0.3 $\Omega$. Further, the circumference of the honeycomb structure 51 was surrounded by a ceramic mat 53. The honeycomb structure with a ceramic mat was held in a stainless case so as to obtain a honeycomb heater on which a catalyst is loaded. The number of slits and the porosity, requisite for the total resistance of 0.3 $\Omega$ of the honeycomb structure in each Example is shown in Table 4.

Table 4

| E x a m p l e No. | 25[*] | 26[*] | 27[*] | 28 |
|---|---|---|---|---|
| Composition (wt%) | | | | |
| Cr | 54.45 | 47.45 | 63.45 | 18 |
| Al | 15 | 12 | 16 | 7 |
| Fe | 30 | 40 | 20 | 74.45 |
| B | 0.05 | 0.05 | 0.05 | 0.05 |
| $Y_2O_3$ | 0.5 | 0.5 | 0.5 | 0.5 |
| Cell structure | | | | |
| Density of cell(cpi²) | 480 | 480 | 480 | 480 |
| Thickness of rib (mil) | 4 | 4 | 4 | 4 |
| Configuration of cell | hexagon | hexagon | hexagon | hexagon |
| Number of slits | 10 | 10 | 10 | 14 |
| Porosity (%) | 4 | 4 | 7 | 2 |

* Present invention

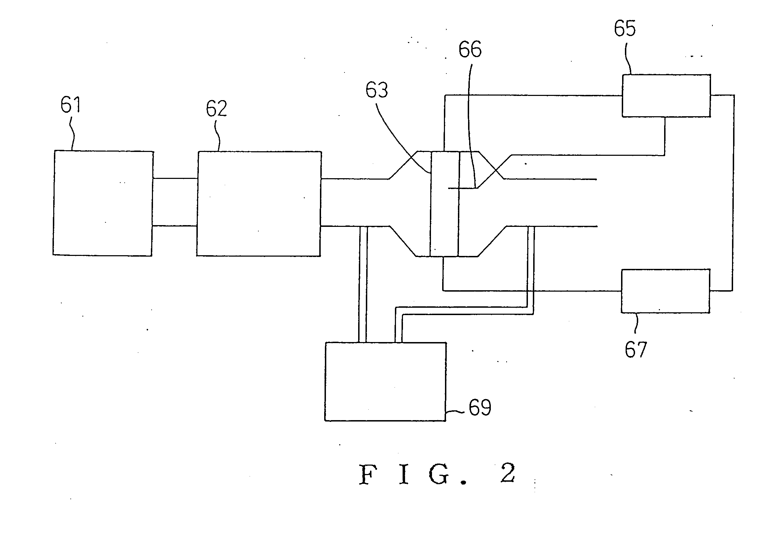

To evaluate thus obtained honeycomb heaters with catalysts being loaded for its purification, the average rate of purification was measured using an apparatus shown in Fig. 2 when electricity was applied and when electricity was not applied. In either case, the exhaust gas from a gasoline engine 61 was cooled down to 120°C by a cooler 62, and then introduced in a honeycomb heater having a catalyst 63.

When electricity was not applied, purification of HC, CO, and $NO_x$ for 60 seconds was measured by a measuring instrument 69 to give the average.

When electricity was applied, the electricity from a 12-volt battery 67 connected with an electrode terminal of the honeycomb heater was subjected to on-off control for 60 seconds by a thermal controller 65 so that a thermocouple 66 in a honeycomb heater 63 has a temperature of 350°C. HC, CO, and $NO_x$ were measured during the 60 seconds to obtain the average. The results are shown in Table 5.

T a b l e     5

| Example No. | Rate of Purification (%) | | | | | |
|---|---|---|---|---|---|---|
| | Not electrified | | | Electrified | | |
| | HC | NO$_x$ | CO | HC | NO$_x$ | CO |
| 2 5 * | 7 0 | 7 0 | 7 6 | 7 7 | 8 7 | 8 8 |
| 2 6 * | 5 8 | 6 1 | 8 0 | 6 9 | 8 2 | 9 4 |
| 2 7 * | 6 6 | 6 6 | 7 5 | 8 0 | 8 4 | 9 0 |
| 2 8 | 5 4 | 6 0 | 7 1 | 6 4 | 7 9 | 8 3 |

\*   Present invention

As shown in Table 5, since each of the honeycomb heaters in Examples 25 - 27, which is within the range of the present invention, was made from a material having high specific resistance, the honeycomb heater of the present invention needs less slits for obtaining a predetermined resistance than the conventional honeycomb heater made of a general Fe-Cr-Al type of alloy in Example 28, and thereby improving strength against vibrations or the like. Further, as shown in Table 5, when the honeycomb heaters each having a catalyst in Examples 25 - 27 of the present invention were used for purifying an exhaust gas, they exhibit the higher purifying rate than the honeycomb heater in Example 28.

As described above, an alloy of the present invention has the higher specific resistance than a Fe-Cr-Al type of alloy which has conventionally been used as a material for a heater. Therefore, a heater made of an alloy of the present invention can have wide variation of configurations. An alloy of the present invention is excellent in corrosion resistance since an alloy of the present invention contains the larger amount of Cr than a conventional Fe-Cr-Al alloy, or the like. When a heater is produced by a sintering method using a metallic powder or the like as a starting material, electric resistance can be further enhanced by suitably control a firing period of time, a firing temperature, etc., to disperse pores.

Further, the honeycomb heater of the present invention can have wide variation of configuration. When slits are arranged to obtain a desired resistance, the heater of the present invention needs less slits than a heater using a conventional Fe-Cr-Al type of alloy, and thereby the strength is improved.

**Claims**

1. An alloy having high specific resistance comprising 41 - 70 wt % of Cr, 8 - 20 wt % of Al, and a balance of Fe and inevitable impurities.

2. An alloy according to claim 1, further comprising totally 5 wt % or less of at least one element selected from the elements in 2A group, 3A group, 4A group, B, C, and oxides containing at least one of these elements.

3. A sintered metal alloy having the composition of claim 1 or claim 2.

4. A honeycomb heater formed of a sintered metal alloy having the composition of claim 1 or claim 2.

F I G. 1

EP 0 676 481 A2

F I G. 2